Europäisches Patentamt

European Patent Office

Office européen des brevets

(11) Veröffentlichungsnummer: **0 419 769 A2**

# (12) EUROPÄISCHE PATENTANMELDUNG

(21) Anmeldenummer: **90111728.3**

(22) Anmeldetag: **21.06.90**

(51) Int. Cl.5: **G01N 27/416**

(30) Priorität: **29.09.89 CH 3562/89**

(43) Veröffentlichungstag der Anmeldung:
**03.04.91 Patentblatt 91/14**

(84) Benannte Vertragsstaaten:
**DE FR GB IT**

(71) Anmelder: **Mettler-Toledo AG**
**Im Langacher**
**CH-8606 Greifensee(CH)**

(72) Erfinder: **Gareiss, Juergen**
**Oberlandstrasse 113**
**CH-8610 Uster(CH)**

(54) **Verfahren zur fortlaufenden Ueberwachung eines Elektrodensystems für potentiometrische Messungen.**

(57) Bei dem beschriebenen Verfahren wird die Überwachung mittels symmetrischer bipolarer Stromimpulse durchgeführt. Die Periodendauer der Stromimpulse ist frei wählbar und kann entsprechend der geforderten Prüfgenauigkeit unterschiedlich eingestellt werden. Auf diese Weise wird ermöglicht, die Überwachung stufenweise durchzuführen, wobei sich die einzelnen Stufen durch die gewählte Periodendauer der eingespeisten Stromimpulse und damit durch die zu erreichende Prüfgenauigkeit unterscheiden. Die symmetrischen bipolaren Stromimpulse werden auf einfache Weise und ohne grossen apparativen Aufwand mittels einer Spannungsteilerschaltung erzeugt. Die Einstellung der Periodendauer erfolgt zweckmässigerweise mittels eines programmgesteuerten Gerätes, welches gleichzeitig der Speicherung, Verarbeitung und Weiterleitung der resultierenden Messwerte dient.

Das Verfahren wird mit Vorteil in der Prozesschemie, in mikrobiologischen Verfahren und der Lebensmitteltechnik eingesetzt. Es erlaubt, auftretende Fehler, wie Beschädigung der ionensensitiven Membran, Kurzschlüsse oder Kabelunterbrechungen, zu erkennen, und Aussagen über den qualitativen Zustand der Elektroden rasch und ohne grossen Aufwand bei minimaler Störung des Prozessablaufs zu erhalten.

Fig. 1

EP 0 419 769 A2

# VERFAHREN ZUR FORTLAUFENDEN ÜBERWACHUNG EINES ELEKTRODENSYSTEMS FÜR POTENTIOMETRISCHE MESSUNGEN

Die Erfindung betrifft ein Verfahren gemäss Oberbegriff des Patentanspruchs 1. Es ist insbesondere für die Überwachung der Funktionsfähigkeit von Elektroden mit ionensensitiver Membran, z.B. Glaselektronen für pH-Messungen, geeignet, kann jedoch ohne Schwierigkeiten an die Erfordernisse anderer Messmethoden, z.B. Sauerstoffelektroden, adaptiert werden.

Der zunehmende Einsatz von Elektrodensystemen zur Messung der Ionenkonzentration in Flüssigkeiten, insbesondere in der Prozesschemie, in mikrobiologischen Verfahren und in der Lebensmitteltechnik, führt zu steigenden Anforderungen hinsichtlich der Messgenauigkeit im Langzeiteinsatz und, vor allem in der Lebensmitteltechnik, hinsichtlich der Unversehrtheit der Elektrodenmembran. So können beispielsweise bei der Beschädigung der Membran anfallende Glassplitter zu Gesundheitsrisiken und/oder dazu führen, dass das Messgut in einer Weise verunreinigt wird, dass es für die vorgesehene Verwendung unbrauchbar wird, was zu erheblichen Materialverlusten und damit zu einer unerwünschten Kostensteigerung führt. Es entstand deshalb eine wachsende Nachfrage nach Verfahren zur Überwachung des Elektrodensytems, die es gestatten, den Zustand und die Funktion der Messelektrode ohne Unterbrechung des Prozesses und insbesondere ohne die Notwendigkeit, die Messelektrode auszubauen oder aus der Messlösung zu entnehmen, laufend zu überwachen.

Aus der US-A-4 189 367 ist bekannt, zur Untersuchung des Zustandes und der Funktion der ionenselektiven Membran eines Elektrodensystems das Elektrodensystem mit Gleichstromimpulsen zu beaufschlagen, derart, dass ein erster Strom, dessen Grösse vom erwarteten Membranwiderstand und damit von der gemessenen Flüssigkeitstemperatur abhängt, in seiner Dauer so bemessen ist, dass er bei intakter Membran zumindest eine vorgegebene Spannnungsänderung erzeugt. Daran anschliessend fliesst durch das Elektrodensystem in Gegenrichtung ein zweiter Strom gleicher Dauer und Grösse, um die durch den ersten Strom hervorgerufene Polarisation aufzuheben. Die Spannnungsänderung wird mit einem Sollwert für eine intakte Membran verglichen, dabei zeigt eine Spannnungsänderung unterhalb des Sollwerts für eine intakte Membran deren Beschädigung an. Dieses Vorgehen sucht also durch eine genügend genaue Messung nach der Bestätigung für eine intakte Elektrode. Das beschriebene Verfahren erfüllt seine Aufgabe, erfordert jedoch einen hohen Schaltungsaufwand für die Regelung des Teststroms in Abhängigkeit von der Temperatur der Flüssigkeit.

Aus der EP-A-0 241 601 ist weiterhin bekannt, zur Überwachung des Zustandes und der Funktion der Messelektrode und/oder der Bezugselektrode eines Elektrodensystems für potentiometrische Messungen eine Wechselspannung zu verwenden. Dabei werden drei verschiedene Stromkreise aufgebaut, die wechselweise geschlossen werden können, und zwar ein erster Stromkreis zwischen der Messelektrode und einer ebenfalls in die Messlösung eintauchenden Hilfselektrode, ein zweiter Stromkreis zwischen der Bezugselektrode und der Hilfselektrode und ein dritter Stromkreis zwischen der Messelektrode und der Bezugelektrode, wobei letzterer zur Bestimmung der Ionenkonzentration in der Messlösung dient. Durch Schliessen des ersten Stromkreises, Messung der Spannungsänderung und deren Vergleich mit dem Sollwert für eine intakte Membran erhält man Auskunft über den Zustand der Messelektrode bzw. deren Membran. Desgleichen erhält man durch Schliessen des zweiten Stromkreises eine Aussage über den Zustand der Bezugselektrode. Dieses Verfahren hat jedoch den Nachteil, dass eine sehr kleine Messfrequenz benötigt wird, da die Grenzfrequenz des Tiefpasses (Membranwiderstand, Kabelkapazität) unbekannt ist und in das Messresultat eingeht.

Es wird bei diesem Verfahren ausserdem während der gesamten Messdauer die Temperatur der Messlösung überwacht. Dadurch können durch Temperaturänderungen hervorgerufene Abweichungen der Messungen aber nur zum Teil kompensiert werden, da ohne Kenntnis des je nach der Glasmischung der Membran wechselnden Temperaturkoeffizienten des Membranwiderstandes gearbeitet wird.

Aufgabe der Erfindung ist es, ein Verfahren anzugeben, das eine möglichen Fehlerquellen angepasste Überwachung der Funktion eines Elektrodensystems zur potentiometrischen Messung der Ionenkonzentration in einer Lösung ohne signifikante Prozessunterbrechung und ohne grossen apparativen oder arbeitsmässigen Aufwand gestattet.

Die gestellte Aufgabe wird durch das im kennzeichnenden Teil des Patentanspruchs 1 definierte Verfahren gelöst.

Dieses Verfahren gestattet es, die einzelnen Prüfungen an die jeweils zu erkennenden Fehlerquellen und die durch sie hervorgerufenen Fehler anzupassen. Diese Fehler haben unterschiedliche Auswirkungen auf die Messgenauigkeit der Ionenkonzentration oder den Ablauf des Prozesses. Es besteht deshalb das Bedürfnis, das Auftreten von Fehlern mit der grössten Gefahr für den Prozess möglichst häufig zu prüfen, ohne dabei den Prozessablauf zu unterbrechen. Dies wird dadurch erreicht, dass man die im Bereich von 40 ms bis 20 x $10^3$ ms liegende Periodendauer der symmetrischen bipolaren Stromimpulse, mit denen das Elektrodensystem beaufschlagt wird, je nach Art des durch die im Einzelfall durchzuführende Prüfung festzustellenden Fehlers auf diesen abstimmt.

Besondere Ausgestaltungen des Verfahrens sind in den Patentansprüchen 2 bis 14 umschrieben.

Mittels der Ausgestaltung nach Patentanspruch 2 kann eine Anpassung des Verfahrens an die Wahrscheinlichkeit des Auftretens verschiedener Arten von Fehlern vorgenommen werden.

Besonders vorteilhaft ist die Ausgestaltung nach Patentanspruch 3, da sie es erlaubt, dass die Fehler mit einer sehr starken Abweichung vom fehlerfreien Ausgangssignal nur sehr kurz geprüft werden und deshalb ohne Störung des Prozessablaufs häufig durchgeführt werden können. Typische Fehler dieser Art sind der Bruch der Glasmembran oder das Auftreten von Kurzschlüssen. Zur Erkennung dieser Fehlerquellen empfiehlt sich die Ausgestaltung nach Patentanspruch 4.

Aus Erfahrung ist es nicht so häufig erforderlich, die Messanordnung auf eine Leitungsunterbrechung zu prüfen. Für diese zweite Stufe wird zweckmässigerweise die Ausgestaltung nach Patentanspruch 5 angewendet. Diese Prüfung kann alle 10 bis 20 Sekunden in das Raster der Kurzzeitprüfungen der ersten Stufe eingefügt werden.

Die Ausgestaltung nach Patentanspruch 6 ermöglicht eine Aussage, ob eine Verunreinigung der Membran oder eine Alterung der Membran vorliegt. Diese Fehler machen sich nur so langsam bemerkbar, dass es ausreicht, die für die Prüfung notwendige Präzisionsmessung in der dritten Stufe nur alle 10 bis 24 Stunden in einem für den Prozess geeigneten Zeitpunkt zu wiederholen. In der dritten Stufe wird in der Regel eine Periodendauer von etwa 2 x $10^3$ ms bis etwa 20 x $10^3$ ms angewendet, um eine genügend genaue Aussage über diese Fehler zu erhalten.

Durch die stufenweise Anordnung der den einzelnen Fehlerquellen angepassten Prüfungen kann erreicht werden, dass alle von den Fehlerquellen verursachten Fehler gemäss ihrer Gefährdung des Prozesses bzw. der Wahrscheinlichkeit des Auftretens überprüft werden. In der Regel geht man entsprechend der Ausgestaltung nach Patentanspruch 7 vor, wobei das starre Raster der Prüfung bei Auftreten einer Fehlermeldung ausser Kraft gesetzt wird und so schnell wie möglich eine Prüfung derselben Stufe wiederholt wird. Falls auch in diesem Fall wieder ein Fehler ermittelt wird, wird umgehend eine Prüfung der nächst höheren Stufe zur Verifikation angefügt.

Mit Vorteil wird bei der Durchführung des Verfahrens die Ausgestaltung gemäss Patentanspruch 8 angewendet.

Die Steuerung der Periodendauer der symmetrischen bipolaren Stromimpulse und der Folge der einzelnen Prüfungen wird zweckmässigerweise entsprechend der Ausgestaltung nach Patentanspruch 9 mittels eines programmgesteuerten Geräts vorgenommen. Dieses Gerät vergleicht auch die gemessenen Ausgangssignale mit den zugehörigen Sollwerten. Ausserdem ist mit diesem Gerät zweckmässigerweise ein Temperaturfühler verbunden, der in das Messmedium eintaucht und so eine exakte Kompensation des Temperatureinflusses auf den Membranwiderstand in Abhängigkeit von dem Temperaturkoeffizieten des Membranwiderstandes der jeweiligen Glasmischung ermöglicht.

Besondere Vorteile für die Durchführung des Verfahrens bieten die Ausgestaltungen entsprechend den Patentansprüchen 10 und 11. Auf diese Weise können die in den einzelnen Phasen des Messverfahrens ermittelten Potentialkurven gespeichert und vom Gerät ausgewertet oder weitergeleitet werden. Wird entsprechend der Ausgestaltung nach Patentanspruch 12 ein Signalgeber zur Auslösung optischer oder akustischer Signale vorgesehen, so kann auf diese Weise ein Benutzer auf das Auftreten von Fehlern, die durch die Beschädigung oder Verschmutzung der Membran oder durch einen Kurzschluss oder eine Unterbrechung einer Leitung hervorgerufen sind, aufmerksam gemacht und ihm so die Möglichkeit gegeben werden, allfällige Fehlerquellen auszuschalten.

Das programmgesteuerte Gerät kann entsprechend der Ausgestaltung nach Patentanspruch 13 in einem internen Speicher die für eine bestimmte Elektrode charakteristischen Initialwerte aufnehmen und damit die durch die Produktion hervorgerufenen Streuungen des Membranwiderstandes ausschalten, indem die Messungen für die Verunreinigung und/oder Alterung der Glaselektrode auf die genauen individuellen Werte bezogen werden. Die Ermittlung der Initialwerte kann beim Ersteinsatz der Elektrode in der Messanordnung vorgenommen werden oder vom Hersteller gemessene Werte werden in das programmgesteuerte Gerät eingegeben.

Die zur Bestimmung des Messwiderstandserforderliche Periodendauer des symmetrischen bipolaren Stromimpulses und damit die Messdauer können auf einen Minimalwert herabgesetzt werden, indem man entsprechend der Ausgestaltung nach Patentanspruch 14 den Messverlauf der Elektrode ermittelt und die Messung dann abbricht, wenn man genügend Messwerte für eine Extrapolation zur Verfügung hat. Auf diese Weise kommt es zu einer minimalen Unterbrechung der Prozessüberwachung.

Ein Ausführungsbeispiel der Erfindung wird nachstehend anhand der Zeichnungen beschreiben, dabei zeigen:

Figur 1 ein Funktionsschema einer Messanordnung zur Durchführung des Verfahrens;

Figuren 2A 2B 2C Potential-/Zeitdiagramme für die Messung des Widerstands der pH-Elektrode;

Figuren 3A 3B Potential-/Zeitdiagramme für ein abgekürztes Messverfahren.

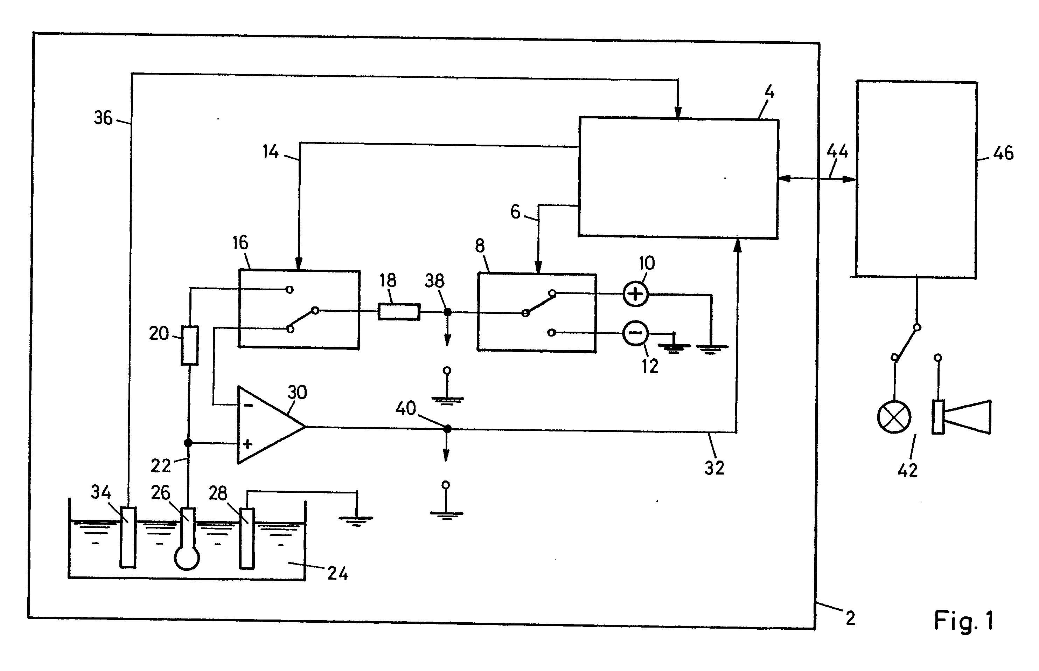

Figur 1 zeigt eine Messanordnung 2, die nach dem Prinzip einer Spannungsteilerschaltung konzipiert ist. Sie weist ein programmgesteuertes Gerät 4 zur Ablaufsteuerung und zur Verarbeitung eingegebener und erhaltener Messdaten auf.

Das programmgesteuerte Gerät 4 ist einerseits über eine Polaritätssteuerleitung 6 mit einem Polaritätsschalter 8, der ein Umschalten von einer positiven Spannungsquelle 10 auf eine negative Spannungsquelle 12 erlaubt, und andererseits über eine Phasensteuerleitung 14 mit einem Phasenschalter 16, der ein Umschalten von der Messphase, im vorliegenden Fall der Messung des pH-Wertes, auf die Prüfphase, d.h. Prüfung der Elektroden und/oder Leitungen gestattet, verbunden. Der Phasenschalter 16 ist seinerseits über einen Vorwiderstand 18 mit dem Polaritätsschalter 8 sowie über einen Spannungsteilerwiderstand 20 und eine Elektrodenleitung 22 mit einer in ein Messmedium 24 eintauchenden Glaselektrode 26 verbindbar. In das Messmedium 24 taucht ausserdem eine Referenzelektrode 28 ein.

In der Messphase, in der die Stellung des Phasenschalters 16 der in Figur 1 gezeigten entspricht, werden von dem aus Glaselektrode 26 und Referenzelektrode 28 bestehenden Elektrodensystem gelieferte Messwerte über die Elektrodenleitung 22, einen Verstärker 30 und eine Signalleitung 32 in das programmgesteuerte Gerät 4 eingespeist. Ausserdem werden von einem Temperatursensor 34, der ebenfalls in das Messmedium 24 eintaucht, gelieferte Messdaten über eine Temperatursensorleitung 36 in das programmgesteuerte Gerät 4 eingespeist, wo sie zusammen mit den vom Elektrodensystem gelieferten Messwerten verarbeitet werden.

Das Umschalten von der Messphase auf die Prüfphase wird durch Betätigen des Phasenschalters 16 erreicht. Dabei wird die Verbindung des Vorwiderstandes 18 zum Spannungsteilerwiderstand 20 hergestellt und gleichzeitig die Verbindung vom Vorwiderstand 18 zum Ausgang des Verstärkers 30 unterbrochen. Damit ist der Prüfstromkreis je nach Stellung des Polaritätsschalters 8 von der positiven Spannungsquelle 10 oder der negativen Spannungsquelle 12 über den Vorwiderstand 18, den Phasenschalter 16, den Spannungsteilerwiderstand 20, die Elektrodenleitung 22, die Glaselektrode 26 und die Referenzelektrode 28 geschlossen. Die Eingangsspannung Ub, mit welcher der Prüfstromkreis beaufschlagt wird, kann an einem Messpunkt 38 zu Kontrollzwecken abgegriffen werden, während das Ausgangssignal Ue nach dem als Impedanzwandler geschalteten Verstärker 30 an einem Messpunkt 40 abgegriffen werden kann. Von hier wird das Ausgangssignal der Prüfung wie schon die Messdaten während der Messphase über die Signalleitung 32 zum programmgesteuerten Gerät 4 zur Auswertung der Prüfung geleitet. Die Ergebnisse der Prüfungen werden im Fehlerfall an eine Warneinrichtung 42 weitergegeben, die in geeigneter Weise durch optische, akustische u.ä. Signalgeber auf den Fehler aufmerksam macht. Mittels einer bidirektionalen Schnittstelle 44 können eine oder mehrere Messeinrichtungen vom Typ der Messanordnung 2 mit einem Zentralrechner 46 verbunden und durch diesen überwacht und/oder gesteuert werden, indem Mess- und Prüfdaten übermittelt werden, die z. B. nach statistischen Gesichtspunkten weiterverarbeitet werden.

In der entgegengesetzten Richtung kann der Zentralrechner 46 nach übergeordneten Kriterien in den Ablauf des programmgesteuerten Geräts 4 eingreifen.

Zur Erzeugung der für die Prüfung benötigten symmetrischen bipolaren Stromimpulse, wie sie durch den Spannungsteilerwiderstand 20 fliessen, ist eine geeignete Dimensionierung der im Prüfstromkreis enthaltenen Widerstände notwendig. Wenn beispielsweise der Vorwiderstand 18 einen Wert von annähernd 10 MΩ hat und der Wert des Spannungsteilerwiderstands 20 bei 20 GΩ liegt, so ist es für die Erzeugung der symmetrischen bipolaren Stromimpulse vorteilhaft, wenn die positive Spannungsquelle 10 eine Spannung $Ub_1 = + 8$ V und die negative Spannungsquelle 12 eine Spannung $Ub_2 = - 8$ V liefern.

Das programmgesteuerte Gerät 4 enthält den gesamten Ablauf der Folge der einzelnen Prüfungen gespeichert, deren Periodendauer, deren zeitlichen Abstand zueinander und den periodischen Wechsel der einzelnen Prüfungsarten. In dem Ausführungsbeispiel ist für die Prüfung der ersten Stufe zur Feststellung eines Kurzschlusses oder Membranbruchs eine Periodendauer von 40 ms und ein Abstand der Prüfungen von 400 ms, für die Prüfung der zweiten Stufe zur Feststellung von Leitungsunterbrechungen eine Periodendauer von 200 ms und ein Abstand der Prüfungen von 20 s, für die Prüfung der dritten Stufe zur Feststellung von Verunreinigungen und/oder Alterung der Glasmembran eine Periodendauer von $10 \times 10^3$ ms und ein Abstand der Prüfungen von 12 h vorgesehen. Durch das programmgesteuerte Gerät 4 wird nicht nur der gewünschte Programmablauf ermöglicht und eine genaue Einstellung der Periodendauer der symmetrischen bipolaren Stromimpulse erreicht, sondern auch die Möglichkeit erschlossen, bei Feststellung eines Fehlers der ersten oder zweiten Stufe, d.h. mit Stromimpulsen mit einer Periodendauer von 40 ms oder 200 ms, selbständig eine Überprüfung der Fehlermeldung durch Wiederholung derselben Stufe zu veranlassen und, falls der Fehler bestätigt wird, einen Übergang zu einer nächsthöheren Prüfungsstufe, d.h. eine Prüfung mit einer längeren Periodendauer, einzuleiten.

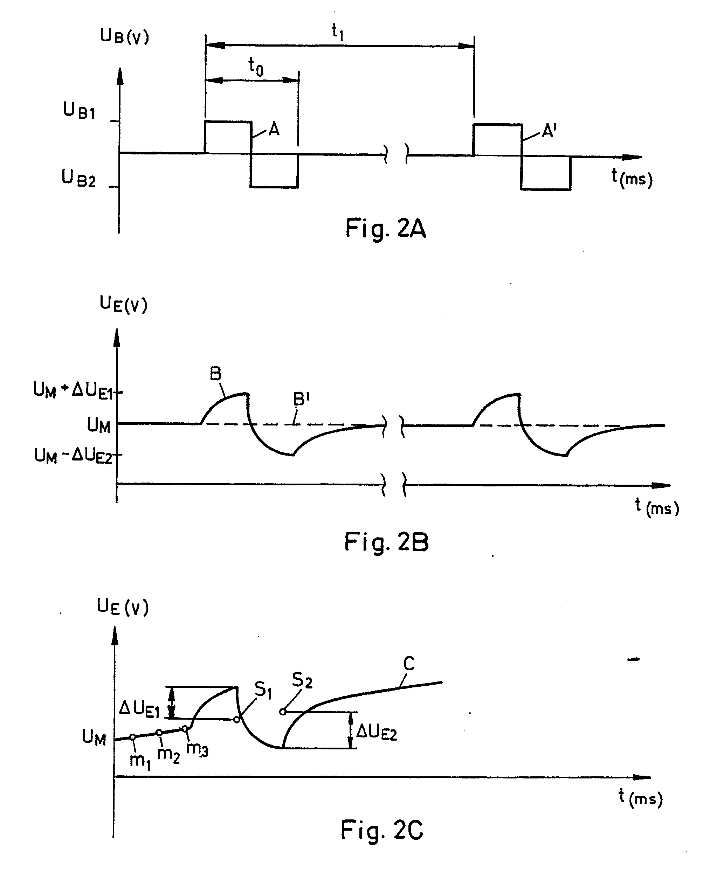

Figur 2A zeigt ein Potential-/Zeitdiagramm, wie es am Eingangsspannungs-Messpunkt 38 gemessen werden kann. Die Ordinate zeigt die Spannung U in Volt, während auf der Abszisse die Zeit t in ms aufgetragen ist. Die symmetrische bipolare Eingangsspannungsimpulse A und A' haben eine Periodendauer $t_o$ und eine Wiederholungsperiode von $t_1$ entsprechend der gewählten Prüfungsart. Die Amplitude $U_{B1}$ und $U_{B2}$ ergibt sich entsprechend der zugeschalteten Spannungsquelle 10 oder 12. Die Stromimpulse verlaufen analog zu dieser Form der Spannungsimpulse gemäss der Dimensionierung der Widerstände 18 und 20.

Die Figur 2B zeigt das Potential-/Zeitdiagramm der Elektrodenspannung, wie sie am Ausgangssignal-Messpunkt 40 gemessen werden kann. Zu dem Zeitpunkt, wenn der positive Eingangsspannungsimpuls über den Phasenschalter 16 eingeleitet wird, beginnt die Elektrodenspannung wie bekannt nach einer eFunktion auf einen Wert von $U_M + \Delta U_{E1}$ anzusteigen. Nach der halben Periodendauer wird die Eingangsspannung auf $U_{B2}$ umgepolt und entsprechend sinkt die Elektrodenspannung wieder nach der e-Funktion auf den Wert $U_M - \Delta U_{E1}$, wie die Kurve B zeigt. Das Erreichen bestimmter für die Elektrode bekannter Werte von $+\Delta U_{E1}$ und $-\Delta U_{E2}$ zeigt die Fehlerfreiheit dieser Prüfung an. Dieser Fall ohne Fehler ist mit der Kurve B dargestellt. Ist bei einer Prüfung der ersten Stufe die Membran der Glaselektrode 26 gebrochen, so wird der symmetrische bipolare Stromimpuls keine Änderung des Ausgangssignals bewirken, wie durch die Kurve B' dargestellt. Dieselbe Wirkung hat auch ein Kurzschluss der Elektrodenleitung 22.

Auch die anderen möglichen Fehler, wie Unterbrechung der Elektrodenleitung 22, Verunreinigung der Glasmembran oder Alterung der Glaselektrode 26 bewirken eine Abweichung vom fehlerfreien Kurvenverlauf B, der zwar weniger drastisch ist als die Kurve B', aber zur Erkennung eines Fehlers ausreicht.

Figur 2C zeigt ein Potential-/Zeitdiagramm entsprechend der Figur 2B, wobei aber die Messspannung $U_M$ während der Prüfung nicht konstant bleibt, sondern sich deutlich ändert, z.B. durch eine pH-Wert-Änderung des Messmediums 24. In diesem Fall errechnet das programmgesteuerte Gerät 4 aus den Messwerten $m_1$, $m_2$ und $m_3$ unmittelbar vor Prüfbeginn die Extrapolation der Kurve des Ausgangssignals und kann so beim Um schalten der Polarität und am Ende der Prüfperiode genügend genau die Stützwerte $s_1$ und $s_2$ ermitteln und damit die Änderungen der Elektrodenspannung $+\Delta U_{E1}$ und $-\Delta U_{E2}$ errechnen. Die Stützwerte erleichtern ausserdem die Fortführung der Prozesssteuerung, da sie ja Messignale darstellen.

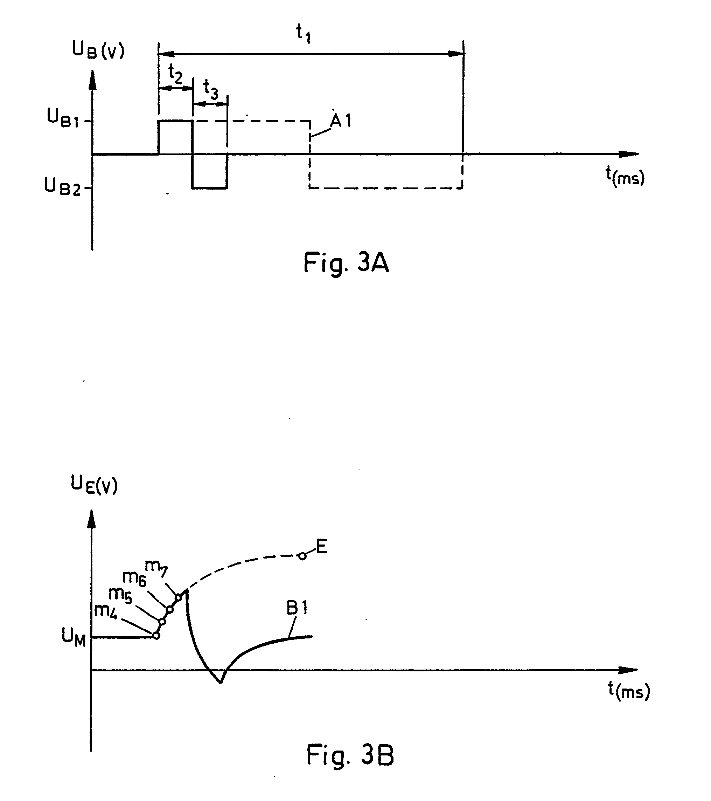

Die Figuren 3A und 3B zeigen die Potential-/Zeitdiagramme entsprechend zu den Figuren 2A und 2B für eine Prüfung mit verkürzter Prüfdauer. Mit Beginn der Prüfung nach Vorliegen der ersten 3 Messwerte $m_4$, $m_5$, $m_6$ errechnet das programmgesteuerte Gerät 4 aus der Extrapolation nach einer e-Funktion den zu erwartenden Endwert E nach halber Prüfperiode. Wenn der nächste Messwert vorliegt, wird die Extrapolation wiederholt ($m_5$, $m_6$, $m_7$). Sobald die beiden letzten errechneten Endwerte $E_{(n)}$ und $E_{(n-1)}$ genügend genau übereinstimmen, wird die Eingangsspannung für die selbe Zeitspanne umgepolt, die bis hierher verstrichen ist. Damit benötigt die Prüfung wie dargestellt nur noch eine Periodendauer von $t_2 + t_3 = 2 \times t_2$. Die Kurve B1 zeigt den nach diesem Verfahren gemessenen Spannungsverlauf, der deutlich schneller zu einer ungestörten Messspannung $U_M$ führt als das Prüfverfahren mit unverkürzter Periodendauer.

In dem hier beschriebenen Ausführungsbeispiel ist das Umschalten sowohl von der Messphase zur Prüfphase, als auch der Polarität der Eingangsspannung allgemein durch Schalter dargestellt. Diese können auf unterschiedliche Art realisiert werden, z.B. als elektromechanische Relais oder als Halbleiterschaltelemente. Ebenso bedeutet die Darstellung von getrennter Referenzelektrode und Glaselektrode in der Figur 1 nicht, dass nicht auch andere Bauformen, z.B. eine kombinierte Elektrode, geeignet sind.

## BEZUGSZEICHENLISTE

2 Messanordnung
4 programmgesteuertes Gerät
6 Polaritätssteuerleitung
8 Polaritätsschalter
10 positive Spannungsquelle
12 negative Spannungsquelle
14 Phasensteuerleitung
16 Phasenschalter
18 Vorwiderstand
20 Spannungsteilerwiderstand
22 Elektrodenleitung
24 Messmedium
26 Glaselektrode
28 Referenzelektrode

30 Verstärker
32 Signalleitung
34 Temperatursensor
36 Temperatursensorleitung
38 Eingangsspannungs-Messpunkt
40 Ausgangssignal-Messpunkt
42 Warneinrichtung
44 bidirektionale Schnittstelle
46 Zentralrechner

## Ansprüche

1. Verfahren zur Erkennung mehrerer unterschiedlicher Fehlerquellen im Zuge der fortlaufenden Überwachung eines Elektrodensystems für potentiometrische Messungen ohne Prozessunterbrechung, wobei das Elektrodensystem mit einem bipolaren Prüfstrom vorgegebener Grösse und Dauer beaufschlagt wird und die dadurch hervorgerufene Spannungsänderung, bezogen auf die Elektrodenspannung ohne Prüfstrom, mit einem rechnerisch oder experimentell ermittelten Sollwert verglichen wird, dadurch gekennzeichnet, dass man das Elektrodensystem mit symmetrischen bipolaren Stromimpulsen mit einstellbarer Periodendauer beaufschlagt, dass man die Periodendauer entsprechend der jeweils zu erkennenden Fehlerquelle wählt und dass man die Periodendauer auf Werte im Bereich von 40 ms bis 20 x 10$^3$ ms einstellt.

2. Verfahren nach Patentanspruch 1, dadurch gekennzeichnet, dass man die einzelnen Messungen periodisch wiederholt, wobei verschiedenen Fehlerquellen unterschiedliche Periodizitäten entsprechen.

3. Verfahren nach Patentanspruch 1 oder 2, dadurch gekennzeichnet, dass man es als dreistufiges Verfahren ausgestaltet, wobei jede Stufe einer zu erkennenden Fehlerquelle angepasst ist, und dass man in den einzelnen Stufen die Periodendauer der symmetrischen bipolaren Stromimpulse entsprechend der für die betreffende Fehlerquelle geforderten Messgenauigkeit einstellt.

4. Verfahren nach einem der Ansprüche 1 bis 3, dadurch gekennzeichnet, dass man in der ersten Stufe zur Feststellung von Beschädigungen der ionensensitiven Membran oder von Kurzschlüssen einen symmetrischen bipolaren Stromimpuls mit einer Periodendauer von 40 ms bis 200 ms anwendet.

5. Verfahren nach einem der Patentansprüche 1 bis 3, dadurch gekennzeichnet, dass man in der zweiten Stufe zur Feststellung von Leitungsunterbrechungen einen symmetrischen bipolaren Stromimpuls mit einer Periodendauer von 100 ms bis 500 ms anwendet.

6. Verfahren nach einem der Patentansprüche 1 bis 3, dadurch gekennzeichnet, dass man in der dritten Stufe zur Qualitätskontrolle der ionensensitiven Membran einen symmetrischen bipolaren Stromimpuls mit einer Periodendauer von 2 x 10$^3$ ms bis 20 x 10$^3$ ms anwendet.

7. Verfahren nach einem der vorangehenden Patenansprüche, dadurch gekennzeichnet, dass man in den Fällen, in denen man bei Durchführung einer Prüfung entsprechend der ersten oder zweiten Stufe eine Fehlermeldung erhält, die Messung der gleichen Stufe wiederholt und, falls die Wiederholung eine Bestätigung der Fehlermeldung ergibt, eine Messung der nächst höheren Stufe durchführt.

8. Verfahren nach einem der vorangehenden Patentansprüche, dadurch gekennzeichnet, dass man die Zeitabstände zwischen den einzelnen Wiederholungen umso kleiner wählt, je kürzer die Periodendauer der für die Prüfung angewendeten Stromimpulse ist.

9. Verfahren nach einem der vorangehenden Patentansprüche, dadurch gekennzeichnet, dass man zur Einstellung der Impulsdauer ein programmgesteuertes Gerät verwendet, das so ausgelegt ist, dass es gleichzeitig im Messmedium auftretende Temperaturänderungen mittels eines in das Messmedium eintauchenden Temperatursensors ermittelt und die Temperaturabhängigkeit der Glaselektrode entsprechend der Glasmischung kompensiert.

10. Verfahren nach Patentanspruch 9, dadurch gekennzeichnet, dass man dem programmgesteuerten Gerät die Ergebnisse der einzelnen Prüfungen zur Verarbeitung zuleitet.

11. Verfahren nach Patentanspruch 10, dadurch gekennzeichnet, dass man die im programmgesteuerten Gerät ermittelten Ergebnisse einem nachfolgenden Rechner zur weiteren Verarbeitung zuleitet.

12. Verfahren nach Patentanspruch 10, dadurch gekennzeichnet, dass man die im programmgesteuerten Gerät ermittelten Ergebnisse einer nachgeschalteten Warneinrichtung zur Auslösung eines optischen oder akustischen Signals im Fehlerfall zuleitet.

13. Verfahren nach einem der vorangehenden Patentansprüche, dadurch gekennzeichnet, dass man die für eine bestimmte Elektrode charakteristischen Initialwerte speichert, um durch die Produktion hervorgerufene Streuungen zu eliminieren und eine individuelle Aussage über den Qualitäts-und/oder Alterungszustand der Elektrode erhalten.

14. Verfahren nach einem der vorangehenden Patentansprüche, dadurch gekennzeichnet, dass man den Ausgangssignalverlauf der Elektrode ermittelt und die Prüfung dann abbricht, wenn man genügend Werte für die Extrapolation zur Verfügung hat, um die Störung der Prozessüberwachung so kurz wie möglich zu halten.

Fig. 1

EP 0 419 769 A2

Fig. 2A

Fig. 2B

Fig. 2C

Fig. 3A

Fig. 3B